# FASCICULE DE BREVET EUROPEEN

(11) **EP 1 438 855 B1**
(45) Date de publication et mention de la délivrance du brevet: **04.12.2013**
(21) Numéro de dépôt: 02796829.6
(22) Date de dépôt: 25.10.2002
(51) Int. Cl.: H04N 7/16, H04N 21/258, H04N 21/418, H04N 21/442, H04N 21/4623, H04N 21/6543

(54) **PROCEDE DE VERIFICATION DE RECEPTEURS DE TELEVISION A CONTROLE D'ACCES ET RECEPTEUR CORRESPONDANT**
VERFAHREN ZUR ÜBERPRÜFUNG EINES FERNSEHEMPFÄNGERS MIT ZUGRIFFSKONTROLLE UND ENTSPRECHENDER EMPFÄNGER
METHOD FOR VERIFYING TELEVISION RECEIVER SETS WITH ACCESS CONTROL AND CORRESPONDING RECEIVER SET

(30) Priorité: 26.10.2001 FR 0113878
(43) Date de publication de la demande: 21.07.2004
(73) Titulaire: NAGRA FRANCE SAS, 75015 Paris (FR)
(72) Inventeur: DAUVOIS, Jean-Luc, F-75116 Paris (FR)
(74) Mandataire: Wenger, Joel-Théophile
(86) Numéro de dépôt international: PCT/FR2002/003673
(87) Numéro de publication internationale: WO 2003/036974

(56) Documents cités:
- WO-A-01/11820
- WO-A-01/35635
- WO-A-01/41443
- WO-A-01/50755

## Description

### Domaine technique

La présente invention a pour objet un procédé de vérification de récepteurs de télévision à contrôle d'accès et un récepteur apte à être vérifié par ce procédé.

### Etat de la technique

Dans la télévision à contrôle d'accès, les données à transmettre sont d'abord embrouillées par un algorithme de chiffrement et les données embrouillées sont ensuite diffusées avec des messages de contrôle d'accès. Les récepteurs des abonnés ayant souscrit l'abonnement approprié sont chargés par des informations constituant un droit d'accès leur permettant de retrouver, dans les messages de contrôle d'accès, la clé nécessaire au désembrouillage des données transmises.

A titre d'exemple, le document FR-A-2 448 825 décrit un système utilisant des clés d'abonnement Ci changeant de manière aléatoire à des intervalles relativement longs de l'ordre du mois, et une clé de service K changeant elle aussi de manière aléatoire mais à des intervalles courts de l'ordre de quelques minutes. Les données sont embrouillées à l'aide de la clé de service K. Les messages de contrôlé d'accès Mi sont obtenus à partir des clés d'abonnement Ci et de la clé de service K par un algorithme paramétré par les clés d'abonnement Ci. Dans le poste récepteur d'un abonné, la carte à puce qu'il contient a été chargée par les clés correspondant aux abonnements souscrits par l'abonné. Le terminal associé à la carte contient un circuit de restitution de la clé de service K, qui reçoit les messages Mi et qui dispose de la clé d'abonnement Ci contenue dans la carte. Ce circuit restitue la clé de service. Des moyens de désembrouillage retrouvent alors les données en clair.

Bien que donnant satisfaction à maints égards, une telle technique présente l'inconvénient d'être sujet à des fraudes. En effet, un récepteur pourrait être modifié par un fraudeur habile pour qu'il puisse recevoir un programme alors même que l'abonné n'a pas acquitté l'abonnement correspondant. Eviter de telles fraudes (ou les réduire), nécessiterait d'effectuer périodiquement des vérifications chez les abonnés pour contrôler l'intégrité de leur récepteur. Ce n'est guère envisageable pour des raisons commerciales évidentes.

La présente invention a justement pour but de résoudre ce problème.

Dans la publication de la demande de brevet international 01/111820 A1, une méthode pour garantir l'intégrité et l'authenticité des données transmises entre un centre de gestion et une ou plusieurs unîtes réceptrices est divulguée. Selon ce document, la méthode consiste a calculer une information de contrôle (Hx) représentative du résultat d'une fonction dite unidirectionnelle et sans collision, effectuée sur tout ou partie de données transmises et de transmettre le résultat au centre de gestion pour vérification. Cette méthode a un désavantage dans le sens que le résultat, ne dépendant que sur le contenu des données, sera le même pour toute récepteur qui se soumet à un contrôle sur la base des mêmes données. Ceci ouvre la possibilité de collaboration entre récepteurs pour obtenir le bon résultat, ainsi permettant à un récepteur dit malveillant de laisser croire au centre de gestion que ses données sont intègres et authentiques même quand ceci n'est pas le cas.

### Exposé de l'invention

Selon l'invention, la vérification d'un récepteur est commandée par l'organisme diffuseur et s'effectue par le récepteur lui-même. Si la vérification montre que le récepteur a conservé son intégrité, il continue à fonctionner normalement. Dans le cas contraire, le fonctionnement est modifié, d'une manière ou d'une autre, par exemple par arrêt partiel ou total.

Selon l'invention, on s'y prend comme suit :
A) - Le diffuseur effectue des calculs paramétrés par un ou plusieurs paramètres déterminés ;
   - le diffuseur transmet ensuite à chaque récepteur les résultats des calculs qui le concernent, chaque récepteur stockant ces différents résultats ;
B) - pour vérifier un récepteur particulier, le diffuseur transmet à ce récepteur le ou les paramètres déterminés ;
   - le récepteur effectue alors le calcul et compare le résultat qu'il obtient avec le résultat correspondant qu'il a stocké ; en cas de désaccord, il modifie son fonctionnement de manière appropriée, par exemple en cessant de fonctionner.

Lorsque le récepteur comprend un terminal et une carte à puce, c'est de préférence la carte qui stocke les résultats de calcul transmis par le diffuseur et c'est le terminal qui effectue le calcul en question.

Dans une première variante, le terminal transmet le résultat de son calcul à la carte ; celle-ci compare ce résultat avec celui qu'elle stocke et, en cas de différence, elle modifie le fonctionnement du récepteur, par exemple en refusant de continuer à coopérer avec le terminal.

Dans une seconde variante, le terminal lit dans la carte celui des résultats qui correspond au calcul qu'il a effectué et compare ce résultat avec celui qu'il a lui-même obtenu ; en cas de différence, il modifie le fonctionnement du récepteur, par exemple en refusant de continuer à coopérer avec la carte.

Les paramètres utilisés peuvent être constitués par un premier paramètre correspondant à l'un des abonnements et par un second paramètre constitué par l'une des caractéristiques des récepteurs, par exemple le numéro de série de leur carte à puce (qui est unique).

Les algorithmes de calcul mis en oeuvre peuvent être d'un type quelconque : il peut s'agir d'algorithmes de chiffrement symétriques ou asymétriques, de type RSA, de type HASH, de type DES ou de tout autre type.

L'algorithme de calcul mis en oeuvre en liaison avec un abonnement n'est pas nécessairement le même que celui qui est mis en oeuvre avec les autres. Cet algorithme peut être introduit dans le terminal à la fabrication ou chargé par le diffuseur au moment de la vérification.

La présente invention a également pour objet un récepteur de télévision apte à être contrôlé selon le procédé qui vient d'être défini. Ce récepteur comprend un terminal et une carte à puce contenant des droits d'accès et il est caractérisé en ce que :
- la carte contient en outre différents résultats de calcul,
- le terminal comprend des moyens aptes à effectuer un calcul déterminé en utilisant un ou plusieurs paramètres déterminés,
- le récepteur comprend des moyens pour comparer le résultat du calcul effectué par le terminal avec le résultat correspondant contenu dans la carte,
- le récepteur comprend des moyens pour modifier son fonctionnement de manière appropriée en cas de différence entre les deux résultats.

Dans une première variante, les moyens pour comparer les résultats sont situés dans la carte, celle-ci étant apte à modifier le fonctionnement du récepteur.

Dans une seconde variante, les moyens pour comparer les résultats sont situés dans le terminal, celui-ci étant apte à modifier le fonctionnement du récepteur.

L'un des paramètres peut correspondre à l'un des abonnements et un autre paramètre peut être l'une des caractéristiques du récepteur et par exemple le numéro de série de la carte.

### Brève description des dessins

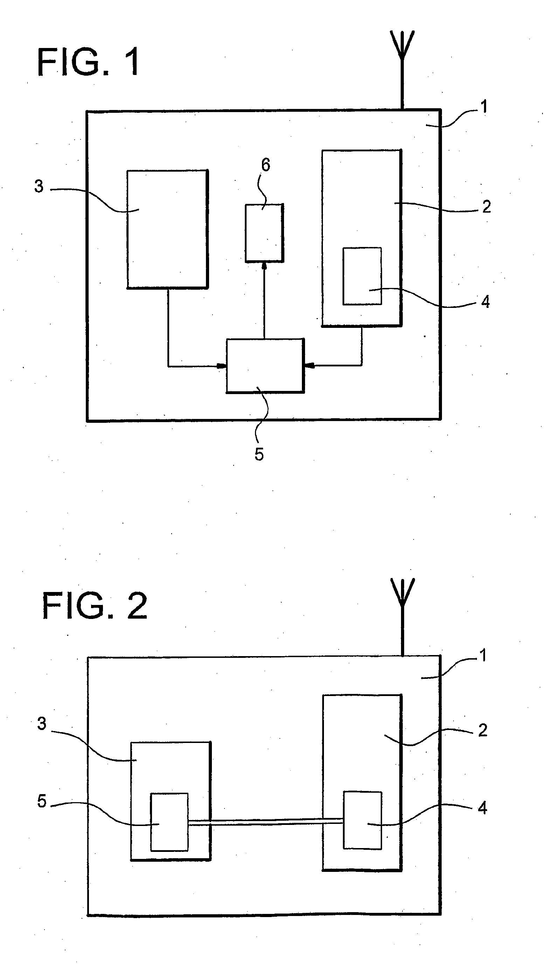

Les figures 1 à 3 illustrent chacune, de façon schématique, un récepteur apte à réaliser le procédé de l'invention.

### Exposé détaillé de modes de réalisation particuliers

On suppose, à titre d'exemple non limitatif, que l'algorithme de calcul est un algorithme de chiffrement à clé symétrique portant sur le numéro de série de la carte à puce. De tels algorithmes sont déjà utilisés dans le contrôle d'accès, notamment pour retrouver la clé de service (cf. l'introduction). On note A_{Ci} (NSj) l'algorithme utilisant la clé Ci, où l'indice i se rapporte aux n différents abonnements du système (i va de 1 à n), et NSj représente le numéro de série du j^{ième} récepteur, l'indice j identifiant le récepteur (j va de 1 à p). Le résultat de ce calcul est noté Ri,j. On suppose que chaque récepteur est muni des n clés d'abonnement Ci.

Le diffuseur calcule, à un moment ou à un autre, les np résultats Ri,j, i allant de 1 à n et j de 1 à p. A un récepteur de rang q déterminé (j = q) correspond seulement n résultats Ri,q correspondant aux n clés d'abonnement Ci (i de 1 à n).

Pour effectuer la vérification du récepteur de rang q, le diffuseur choisit l'une des clés d'abonnement parmi les n soit Ck, et ordonne au récepteur d'effectuer le calcul en prenant comme paramètre la clé Ck. Ce calcul avait donné le résultat Rk, q lorsque le diffuseur l'avait effectué. Celui-ci calcule donc Act (NSq) et compare le résultat avec celui qu'il a déjà reçu du diffuseur et qu'il a stocké. S'il y a égalité entre les résultats, le récepteur continue son fonctionnement normal. Si les résultats sont discordants, ou si le récepteur ne peut même pas effectuer le calcul demandé, il y a eu manipulation frauduleuse du récepteur et le fonctionnement peut être interrompu.

Le tableau 1 résume ces opérations.

Ce tableau ne précise pas quels moyens du récepteur effectuent la comparaison des résultats. Dans 30 le tableau II, il est supposé que c'est la carte qui se charge de cette tâche. Dans ce cas, les résultats inscrits dans la carte ne sont pas lisibles par le terminal. Le tableau III correspond au cas où c'est le terminal qui se charge de la comparaison. Dans les deux tableaux II et III 1' indice q, repérant le récepteur, a été omis pour simplifier les notations.

**Tableau I**

| **DIFFUSEUR** | | **RECEPTEUR j = q** | |
|---|---|---|---|
| **• Calcul tous les Rij** ***=** A_{Cᵢ}* **(NSj)** | | | |
| | **(i de 1 à n)** | | |
| | **(j de 1 à p)** | **• Stock Ci (i de 1 à n)** | |
| | | | **Stocke Ri,q** |
| | | | |
| **• Transmet au récepteur q** | | | |
| | **Ci (i de 1 à n)** | **• Calcule R'k,q=** *A_{Cₖ}* **(NSq)** | |
| | **Ri,q** | | **Compare R'k,q et Rk,q** |
| **• Ordonne au récepteur q le calcul en stipulant i=k soit R_{k,q} =** *A_{Cₖ}* **(NSq)** | | | |

**Tableau II**

| **CARTE A PUCE** | **TERMINAL** | |
|---|---|---|
| **Stocke Ci et Ri (i de 1 à n)** | **• Reçoit l'ordre de calcul avec un** | |
| | | **Ci déterminé** |
| | **• Lit dans la carte Ci et NS** | |
| **Compare R'i et Ri** | **• Calcule R'i** ***=** A_{C_{¡}}* **(NS)** | |
| | **• Transmet R'i à la carte** | |

**Tableau III**

| **CARTE A PUCE** | **TERMINAL** |
|---|---|
| • Stocke Ci et Ri | • Reçoit l'ordre de calcul avec |
| | Ci déterminé |
| | • Lit dans la carte Ci et NS |
| | • Calcule R'i= *A_{Cᵢ}* (NS) |
| | • Lit Ri dans la carte |
| | • Compare R'i et Ri |

A titre d'exemple simple, on peut supposer qu'à chaque récepteur correspond un abonnement. Le diffuseur calcule les n résultats Rᵢ. Au récepteur de rang q correspond un résultat Rq correspondant à la clé d'abonnement Cq et à l'algorithme AC_{q}.

Pour effectuer la vérification de ce récepteur, le diffuseur ordonne à celui-ci d'effectuer le calcul en prenant comme paramètre cette clé Cq. Ce calcul avait donné le résultat Rq lorsque le diffuseur l'avait effectué. Le récepteur calcule donc AC_{q}(NSq) et compare le résultat obtenu avec celui Rq qu'il tient du diffuseur.

On observera que, dans l'invention, le terminal et la carte à puce sont des produits dynamiques, en ce sens que leurs contenus peuvent varier : à tout moment ils peuvent recevoir de nouveaux droits d'accès et de nouveaux résultats de calcul.

L'algorithme de calcul peut faire appel à d'autres clés que les clés d'abonnement proprement dites, et par exemple à des clés diversifiées obtenues à partir d'une clé de base combinée à l'identifiant de chaque carte à puce. Dans ce cas, chaque récepteur effectue un calcul avec une clé qui lui est propre. De même, l'algorithme peut être changé ou modifié dynamiquement

Chacun des modes de réalisation de récepteur correspondant aux tableaux **I** à III est illustré sur chacune des figures 1 à 3 respectivement.

Sur la figure 1 le récepteur de télévision 1 apte à être vérifié par le procédé selon l'un des modes de réalisation de l'invention comprend un terminal 2 et une carte à puce 3 contenant des droits d'accès relatifs à des abonnements. La carte contient en outre différents résultats de calculs.

Le terminal 2 comprend des moyens 4 aptes à effectuer l'un quelconque des calculs prévus par le procédé en utilisant un ou des paramètres prédéterminés.

Le récepteur 1 comprend des moyens 5 pour comparer le résultat du calcul effectué par le terminal 2 avec le résultat correspondant contenu dans la carte 3.

Le récepteur comprend des moyens 6 pour modifier son fonctionnement de manière appropriée en cas de différence entre les deux résultats.

Dans la figure 2, montrant un récepteur apte à réaliser un mode de réalisation de l'invention, les moyens 5 pour comparer le résultat du calcul effectué par le terminal 2 avec le résultat correspondant contenu dans la carte 3, sont situés dans la carte 3, celle-ci étant apte à modifier le fonctionnement du récepteur.

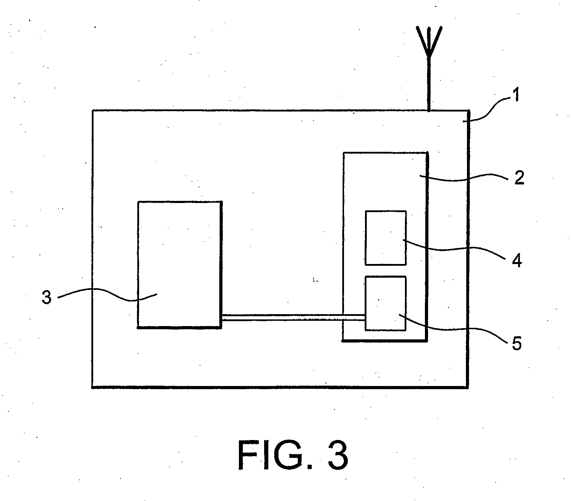

Dans la figure 3, montrant un récepteur apte à réaliser un autre mode de réalisation de l'invention, les moyens 5 pour comparer le résultat du calcul effectué par le terminal 2 avec le résultat correspondant contenu dans la carte 3, sont situés dans le terminal 2, celui-ci étant apte à modifier le fonctionnement du récepteur.

## Revendications

1. Procédé de vérification de récepteurs pour système de télévision à contrôle d'accès, dans lequel un diffuseur transmet à des abonnés ayant souscrit des abonnements les droits d'accès correspondants, les récepteurs stockant ces droits d'accès, ce procédé étant **caractérisé en ce que** :
A. le diffuseur effectue, pour chaque récepteur, une pluralité de calculs, chaque calcul étant paramétré par un premier paramètre correspondant à l'un des abonnements et un second paramètre constitué par l'une des caractéristiques du récepteur,
• le diffuseur transmet ensuite à chaque récepteur les résultats des calculs qui le concernent,
• chaque récepteur stocke ces résultats,
B. pour vérifier un récepteur particulier :
• le diffuseur choisit un des premiers paramètres correspondant à l'un des abonnements,
• le diffuseur ordonne au récepteur d'effectuer un desdits calculs en indiquant au récepteur le paramètre choisi,
• le récepteur effectue le calcul en prenant le paramètre choisi et un paramètre constitué par l'une de ses caractéristiques, ainsi créant un résultat obtenu par le récepteur,
le récepteur,
• une comparaison entre le résultat obtenu par le récepteur et le résultat précédemment stocké est effectuée,
• en cas de différence, le fonctionnement du récepteur est interrompu,
les calculs effectués par le diffuseur et les récepteurs étant définis par un algorithme de chiffrement dont la clé de chiffrement dépend des clés d'abonnement, ce chiffrement portant sur un nombre qui dépend de l'une des caractéristiques de chaque récepteur.

2. Procédé selon la revendication 1, dans lequel, chaque récepteur comprenant un terminal et une carte à puce, c'est la carte qui stocke les droits d'accès et les résultats que lui transmet le diffuseur et c'est le terminal qui effectue le calcul demandé par le diffuseur.

3. Procédé selon la revendication 2, dans lequel :
• le terminal transmet le résultat de son calcul à la carte,
• la carte compare le résultat transmis par le terminal et le résultat correspondant qu'elle a reçu du diffuseur,
• en cas de différence la carte interrompt le fonctionnement du récepteur.

4. Procédé selon la revendication 2, dans lequel :
• le terminal lit dans la carte le résultat correspondant au calcul qu'il effectue,
• le terminal compare le résultat de son calcul avec le résultat lu dans la carte,
• en cas de différence le terminal interrompt le fonctionnement du récepteur.

5. Procédé selon la revendication 1, dans lequel la clé de chiffrement est une clé d'abonnement.

6. Procédé selon la revendication 1, dans lequel la caractéristique chiffrée est le numéro de série de la carte à puce utilisée dans le récepteur.

7. Récepteur de télévision apte à être vérifié par le procédé selon l'une quelconque des revendications 1 à 6, ce récepteur comprenant un terminal et une carte à puce contenant des droits d'accès relatifs à des abonnements, ce récepteur étant **caractérisé en ce que** :
• la carte contient en outre les résultats de calculs,
• le terminal comprend des moyens aptes à effectuer l'un quelconque de ces calculs en utilisant un premier paramètre constitué par un des droits d'accès contenus dans la carte et un second paramètre constitué par l'une des caractéristiques du récepteur,
• le récepteur comprend des moyens pour comparer le résultat du calcul effectué par le terminal avec le résultat correspondant contenu dans la carte,
• le récepteur comprend des moyens pour interrompre son fonctionnement en cas de différence entre les deux résultats.

8. Récepteur selon la revendication 7, dans lequel les moyens pour comparer les résultats sont situés dans la carte, celle-ci étant apte à interrompre le fonctionnement du récepteur.

9. Récepteur selon la revendication 7, dans lequel les moyens pour comparer les résultats sont situés dans le terminal, celui-ci étant apte à interrompre le fonctionnement du récepteur.

10. Récepteur selon la revendication 7, dans lequel le second paramètre utilise pour effectuer le calcul est le numéro de série unique de la carte.

11. Carte à puce pour utilisation avec un récepteur de télévision, le récepteur de télévision étant apte à être vérifié par le procédé selon l'une quelconque des revendications 1 à 6, la carte à puce (3) contenant les clés d'abonnement (Ci) et les résultats (Ri) des calculs effectués par le diffuseur, les calculs concernant le récepteur.

12. Carte à puce selon la revendication 11, comprenant en outre des moyens pour comparer (5) les résultats (Ri) des calculs effectués par le diffuseur et contenus dans la carte avec les résultats de calculs effectués par le récepteur.

## Patentansprüche

1. Verfahren zur Prüfung von Empfängern für ein Fernsehsystem mit Zugangskontrolle, in dem ein Sender an Abonnenten, die ein Abonnement abgeschlossen haben, die entsprechenden Zugangsrechte überträgt, wobei die Empfänger diese Zugangsrechte speichern, wobei das Verfahren durch folgendes gekennzeichnet ist:
A. der Sender führt für jeden Empfänger eine Vielzahl von Berechnungen durch, wobei jede Berechnung von einem ersten Parameter parametriert wird, der einem der Abonnements entspricht, und einem zweiten Parameter bestehend aus einem der Merkmale des Empfängers,
- der Sender überträgt danach an jeden Empfänger die Ergebnisse der Berechnungen, die ihn betreffen,
- jeder Empfänger speichert diese Ergebnisse,
B. um einen besonderen Empfänger zu überprüfen:
- der Sender wählt einen der ersten Parameter, der einem der Abonnements entspricht,
- der Sender befiehlt dem Empfänger, eine der genannten Berechnungen durchzuführen, indem er dem Empfänger den gewählten Parameter angibt,
- der Empfänger führt die Berechnung mit dem gewählten Parameter und einem Parameter durch, der aus einem seiner Merkmale besteht, so dass sich ein Ergebnis ergibt, das vom Empfänger erhalten wird,
- ein Vergleich zwischen dem vom Empfänger erhaltenen Ergebnis und dem vorher gespeicherten Ergebnis wird durchgeführt,
- bei Nichtübereinstimmung wird der Betrieb des Empfängers unterbrochen,
die vom Sender und vom Empfänger durchgeführten Berechnungen werden von einem Verschlüsselungsalgorithmus definiert, dessen Chiffrierschlüssel von den Abonnementsschlüsseln abhängt; diese Verschlüsselung führt zu einer Zahl, die von einem der Merkmale jedes Empfängers abhängt.

2. Verfahren nach Anspruch 1, wobei jeder Empfänger ein Terminal und eine Chipkarte umfasst, wobei die Karte die Zugangsrechte und die Ergebnisse speichert, die ihr der Sender übermittelt, und der Terminal die vom Sender beantragte Berechnung durchführt.

3. Verfahren nach Anspruch 2, bei dem:
- der Terminal das Ergebnis seiner Berechnung an die Karte überträgt,
- die Karte vergleicht das vom Terminal übertragene Ergebnis mit dem entsprechenden Ergebnis, das sie vom Sender empfangen hat,
- bei Nichtübereinstimmung unterbricht die Karte den Betrieb des Empfängers.

4. Verfahren nach Anspruch 2, bei dem:
- der Terminal in der Karte das Ergebnis entsprechend der Berechnung, die er durchführt, liest,
- der Terminal das Ergebnis seiner Berechnung mit dem in der Karte gelesenen Ergebnis vergleicht,
- bei Nichtübereinstimmung der Terminal den Betrieb des Empfängers unterbricht.

5. Verfahren nach Anspruch 1, bei dem der Chiffrierschlüssel ein Abonnementsschlüssel ist.

6. Verfahren nach Anspruch 1, bei dem das verschlüsselte Merkmal die Seriennummer der Chipkarte ist, die in dem Empfänger benutzt wird.

7. Fernsehempfänger, der fähig ist, von dem Verfahren nach einem beliebigen der Patentansprüche 1 bis 6 überprüft zu werden, und der ein Terminal und eine Chipkarte umfasst, die Zugangsrechte bezüglich Abonnements enthält, wobei dieser Empfänger **dadurch gekennzeichnet ist, dass**:
- die Karte außerdem die Ergebnisse von Berechnungen enthält,
- der Terminal Mittel umfasst, die geeignet sind, eine beliebige diese Berechnungen durchzuführen, unter Benutzung eines ersten Parameters bestehend aus einem der Zugangsrechte in der Karte, und eines zweiten Parameters bestehend aus einem der Merkmale des Empfängers,
- der Empfänger umfasst Mittel, um das Ergebnis der vom Terminal durchgeführten Berechnung mit dem in der Karte enthaltenen Ergebnis zu vergleichen,
- der Empfänger umfasst Mittel, um bei Nichtübereinstimmung zwischen den beiden Ergebnissen seinen Betrieb zu unterbrechen.

8. Empfänger nach Anspruch 7, bei dem die Mittel, um die Ergebnisse zu vergleichen, in der Karte liegen und letztere fähig ist, den Betrieb des Empfängers zu unterbrechen.

9. Empfänger nach Anspruch 7, bei dem die Mittel, um die Ergebnisse zu vergleichen, im Terminal liegen und letzterer fähig ist, den Betrieb des Empfängers zu unterbrechen.

10. Empfänger nach Anspruch 7, bei dem der zweite Parameter, der benutzt wird, um die Berechnung durchzuführen, die eindeutige Seriennummer der Karte ist.

11. Chipkarte zur Benutzung mit einem Fernsehempfänger, wobei der Fernsehempfänger fähig ist, von dem Verfahren nach einem beliebigen der Patentansprüche 1 bis 6 überprüft zu werden, wobei die Chipkarte (3) die Abonnementsschlüssel (Ci) und die Ergebnisse (Ri) der vom Sender durchgeführten Berechnungen enthält, wobei die Berechnungen den Empfänger betreffen.

12. Chipkarte nach Anspruch 11, mit zusätzlichen Mitteln, um die Ergebnisse (Ri) der vom Sender durchgeführten Berechnungen, die in der Karte enthalten sind, mit den Ergebnissen der vom Empfänger durchgeführten Berechnungen zu vergleichen (5).

## Claims

1. A receiver verification method for a television access control system, in which a broadcaster transmits the corresponding access rights to users having obtained subscriptions, the receivers storing these access rights, the method **characterised in that**:
A. the broadcaster performs a plurality of calculations for each receiver, each calculation being parameterised by a first parameter corresponding to one of the subscriptions and a second parameter formed by one of the characteristics of the receiver,
○ the receiver then sends, to each receiver, the results of the calculations concerning that receiver,
○ each receiver stores these results,
B. to verify a particular receiver:
○ the broadcaster chooses one of the first parameters corresponding to one of the subscriptions,
○ the broadcaster orders the receiver to perform one of said calculations while indicating the chosen parameter to the receiver,
○ the receiver performs the calculation using the chosen parameter and a parameter formed by one of the characteristics of the receiver, thereby creating a result obtained by the receiver,
○ a comparison between the result obtained by the receiver and the previously stored result is performed,
○ in the case of a difference, the operation of the receiver is interrupted, the calculations performed by the broadcaster and the receivers being defined by an encryption algorithm whose encryption key is dependent upon the subscription keys, this encryption leading to a number which is dependent upon one of the characteristics of each receiver.

2. The method according to claim 1, in which, each receiver comprising a terminal and a chip card, it is the card which stores the access rights and the results which are sent to it by the broadcaster and it is the terminal which performs the calculation requested by the broadcaster.

3. The method according to claim 2, in which:
○ the terminal sends the result of its calculation to the card,
○ the card compares the result transmitted by the terminal and the corresponding result which was received from the broadcaster,
○ in the case of a difference, the card interrupts the operation of the receiver.

4. The method according to claim 2, in which:
○ the terminal reads, from the card, the result corresponding to the calculation which was performed by it,
○ the terminal compares the result of its calculation with the result read from the card,
○ in the case of a difference, the terminal interrupts the operation of the receiver.

5. The method according to claim 1, in which the encryption key is a subscription key.

6. The method according to claim 1, in which the encrypted characteristic is the serial number of the chip card used in the receiver.

7. A television receiver capable of being verified by the method according to any of claims 1 to 6, the receiver comprising a terminal and a chip card containing access rights relative to subscriptions, this receiver being **characterised in that**:
○ the card further contains results of calculations,
○ the terminal comprises means for performing any of these calculations using a first parameter formed by one of the access rights contained in the card and a second parameter formed by one of the characteristics of the receiver,
○ the receiver comprises means for comparing the result of the calculation performed by the terminal with the corresponding result contained in the card,
○ the receiver comprises means for interrupting its operation in the case where there is a difference between the two results.

8. The receiver according to claim 7, in which the means for comparing the results is situated in the card, the card being configured to interrupt the operation of the receiver.

9. The receiver according to claim 7, in which the means for comparing the results is situated in the terminal, the terminal being configured to interrupt the operation of the receiver.

10. The receiver according to claim 7, in which the second parameter used for performing the calculation is the unique serial number of the card.

11. A chip card for ise with a television receiver, the television receiver being configured to be verified by the method according to any of claims 1 to 6, the chip card (3) containing the subscription keys (Cᵢ) and the results (Rᵢ) of the calculations performed by the broadcaster, the calculations concerning the receiver.

12. The chip card according to claim 11, further comprising means for comparing (5) the results (Rᵢ) of the calculations performed by the broadcaster and contained in the card with the results of the calculations performed by the receiver.
